# EUROPEAN PATENT SPECIFICATION

(11) **EP 0 291 736 B1**
(45) Date of publication and mention of the grant of the patent: **23.06.1993**
(21) Application number: 88106732.6
(22) Date of filing: 27.04.1988
(51) Int. Cl.: G21C 3/34

(54) **Nuclear-fuel-rod supporting grid**
Kernbrennstoffstabstützgitter
Grille de support pour aiguille de combustible nucléaire

(30) Priority: 22.05.1987 US 53990
(43) Date of publication of application: 23.11.1988
(73) Proprietor: WESTINGHOUSE ELECTRIC CORPORATION, Pittsburgh Pennsylvania 15222 (US)
(72) Inventor: Demario, Edmund Emory, Columbia, SC 29205 (US)
(74) Representative: Patentanwälte Dipl.-Ing. R. Holzer Dipl.-Ing. (FH) W. Gallo

(56) References cited:
- EP-A- 0 025 395
- EP-A- 0 148 452
- DE-A- 1 514 469
- FR-A- 2 303 352
- FR-A- 2 365 182

## Description

The present invention relates generally to nuclear fuel assemblies and, more particularly, to a nuclear fuel rod grid having a unique fuel rod engaging spring structure.

In most nuclear reactors, the reactor core consists of a large number of elongate fuel assemblies, each of which includes a plurality of fuel rods held in an organized array by a plurality of grids spaced apart axially along the fuel assembly and attached to elongate control-rod guide thimbles which have top and bottom nozzles of the fuel assembly secured to opposite ends thereof.

As well known in the art, the grids of a fuel assembly serve to maintain a precise spacing between the fuel rods, to prevent rod vibration, to provide lateral support for the fuel rods, and, to some extent, to frictionally retain the rods against longitudinal movement.

One popular conventional grid design, illustrated and described in U.S.-A-4,492,844, consists of a plurality of metal straps interleaved to form an egg-crate-like structure which defines open cells for receiving the fuel rods and control-rod guide thimbles. The fuel rods extending through the various cells are laterally supported therein by detents, such as relatively compliant springs and relatively rigid dimples, which are formed out of the metal of the interleaved straps and project into the respective cells so as to frictionally engage the fuel rods extending therethrough. The outer periphery of such grid is formed by outer straps which are joined to each other at the ends thereof, and to which the ends of the inner straps are connected so as to impart strength and rigidity to the complete grid. Other examples of prior art support grids of the kind in question are disclosed in EP-A-0 025 395, FR-A-2 365 182 or US-A-3 928 131.

The invention has for its principal object to provide a grid with an improved spring structure which permits the height of the grid, hence the amount of neutron-parasitic and pressure-drop increasing structural material, to be reduced without impairing the desired function of the spring structure or the strength and rigidity of the grid as a whole.

The invention accordingly resides in a nuclear-fuel-rod supporting grid as defined in the appended claim 1.

The elongate cross member is preferably arched in a manner such as to define, between itself and the plane of the associated cell-wall defining strap section, a space permitting unimpeded flow of coolant fluid therethrough. Each of the leg members is somewhat curved so as to project from the plane of the associated cell-wall defining strap section inwards of the associated cell but to a lesser extent than the cross member, both leg members being resiliently deflectable toward said plane. Preferably, the elongate cross member is slanted at an angle of substantially forty-five degrees with respect to said leg members and, hence, to the longitudinal axis of the associated cell (thus, the direction of coolant flow through the cell). This appears to be the optimum angle resulting in reduced grid height and in a minimization of the spring profile presented to the coolant flow through the cell. In fact, this profile of the spring structure according to the invention is less than that of a conventional horizontal dimple because smaller radii can be stamped due to the inclined angle at which the cross member is disposed. Moreover, the diagonal cross member stiffens the grid strap on which it is formed, thereby contributing to the stability of the grid.

The two leg members which have only their opposite ends connected to the associated cell-wall defining strap section give the spring structure according to the invention a soft compliant spring action. A fuel rod being inserted into the respective cell will engage the mid-section of the cross member of each spring structure in the cell and deflect it toward its associated cell-wall defining strap section, thereby causing also the leg members connected to the cross member to be resiliently deflected back into the plane of the strap section and, hence, out of the coolant flow path through the cell.

A preferred embodiment of the invention will now be described, by way of example only, with reference to the accompanying drawings, in which:
Fig. 1 is an elevational view, partly in section, of a fuel assembly illustrated in vertically foreshortened form and with parts broken away for clarity;
Fig. 2 is an enlarged top plan view, as seen along line 2--2 of Fig. 1, of one of the fuel rod support grids of the fuel assembly;
Fig. 3 is an enlarged fragmentary top plan view of the lower right-hand corner of the grid shown in Fig. 2;
Figs. 4 and 5 are elevational views of end portions of outer grid straps meeting to form the corner of the grid in Fig. 3 as seen along lines 4--4 and 5--5, respectively;
Fig. 6 is an enlarged fragmentary top plan view of one of a first set of the inner straps of the grid embodying the invention;
Fig. 7 is a side elevational view as seen along line 7--7 of Fig. 6;
Fig. 8 is another side elevational view as seen along line 8--8 of Fig. 6;
Fig. 9 is an enlarged fragmentary top plan view of one of a second set of the inner straps which interfit with the inner straps of the first set to form the grid;
Fig. 10 is a side elevational view as seen along line 10--10 of Fig. 9;
Fig. 11 is another side elevational view as seen along line 11--11 of Fig. 9;
Fig. 12 is a fragmentary portion of the side elevational view of Fig. 11;
Fig. 13 is an end elevational view as seen along line 13--13 of Fig. 12;
Fig. 14 is a sectional view taken along line 14--14 of Fig. 12;
Fig. 15 is an enlarged sectional view taken along line 15--15 of Fig. 12 and showing the curvature of a leg member or portion of the spring structure on the inner strap;
Fig. 16 is an enlarged sectional view taken along line 16--16 of Fig. 12 and showing the curvature of one of the dimples on the inner strap;
Fig. 17 is an enlarged sectional view taken along line 17--17 of Fig. 12 and showing the curvature of the cross member of the spring structure on the inner strap; and
Fig. 18 is another enlarged sectional view taken along line 18--18 of Fig. 12 and showing the curvature of leg and cross members of the spring structure on the inner strap.

In the following description, like reference characters designate like or corresponding parts throughout the several views of the drawings; terms such as "forward", "rearward", "left", "right", "upwardly", "downwardly", are used as words of convenience not to be construed as limiting terms.

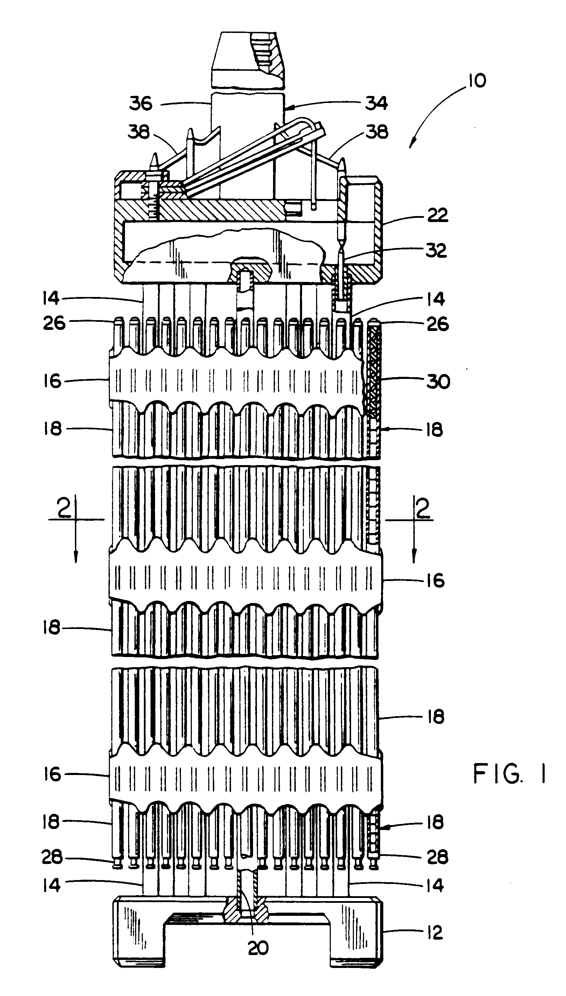

Referring now to the drawings, and to Fig. 1 in particular, the fuel assembly shown therein and designated generally with numeral 10 is of the type commonly utilized in pressurized water reactors (PWR). Basically, it comprises a lower end structure or bottom nozzle 12 for supporting the assembly on the lower core plate (not shown) in the core region of a reactor (not shown), a plurality of guide tubes or thimbles 14 longitudinally extending upward from the bottom nozzle 12, a plurality of transverse grids 16 axially spaced part along, and supported by, the guide thimbles 14, a plurality of elongate fuel rods 18 transversely spaced and supported in an organized array by the grids 16, an instrumentation tube 20 located in the center of the fuel assembly, and an upper end structure or top nozzle 22 attached to the upper ends of the guide thimbles 14. With this arrangement of parts, the fuel assembly 10 forms an integral unit capable of being conveniently handled without damage to the assembly parts.

Each fuel rod 18 contains nuclear fuel pellets 24 and has its opposite ends hermetically sealed by means of end plugs 26, 28, a plenum spring 30 being disposed between the upper end plug 26 and the pellets 24 to maintain the pellets firmly stacked within the rod 18.

The top nozzle 22 supports a rod cluster control mechanism 34 including an internally threaded cylindrical member 36 with radially extending flukes or arms 38 each of which is connected to a control rod 32 axially movable in one of the guide thimbles 14, the control mechanism 34 being operable to move the control rods 32 so as to control the fission process in the fuel assembly 10, all as well known in the art.

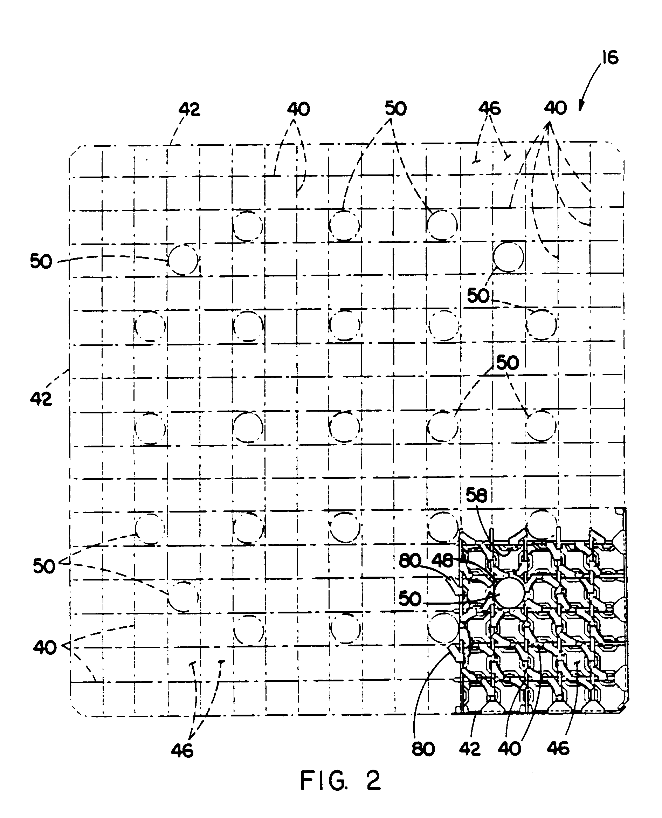

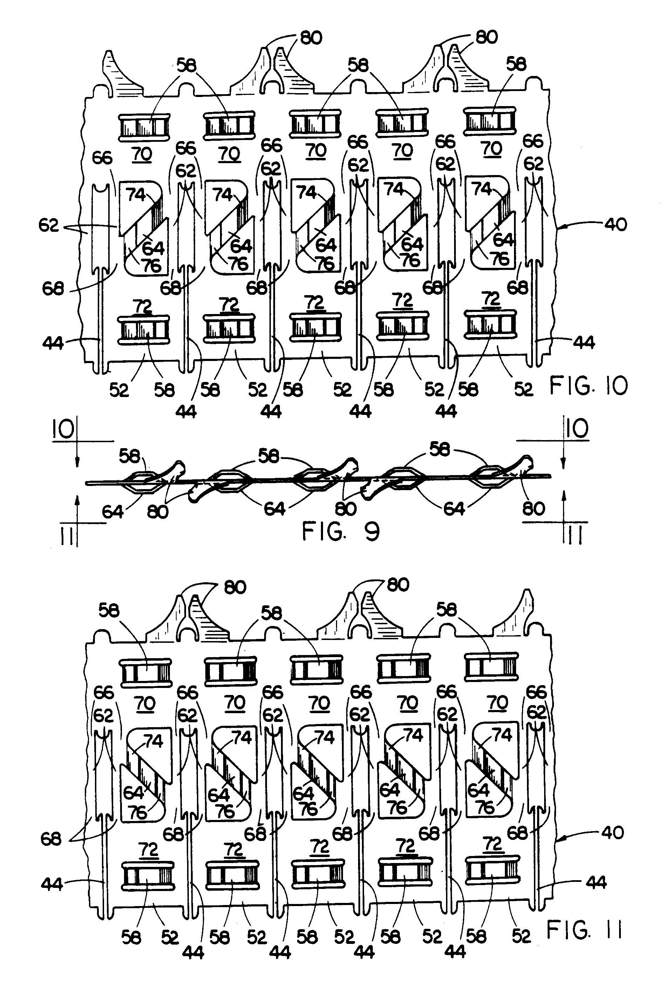

Referring now to Figs. 2 to 11, the grid 16 illustrated therein consists of a plurality of inner and outer straps 40, 42 having slots 44 which enable the straps to be interleaved with one another in an egg-crate-like configuration so as to form a matrix of open cells 46 for receiving fuel rods, and a plurality of openings 48. At their intersections, the straps 40, 42 are suitably secured together, such as by welding. The cells 46 of the grid 16 are adapted each to receive one of the fuel rods 18, and the openings 48 have inserted therein sleeves 50 which are attached to the inner straps 40 and are employed to affix the grid 16 to the guide thimbles 14.

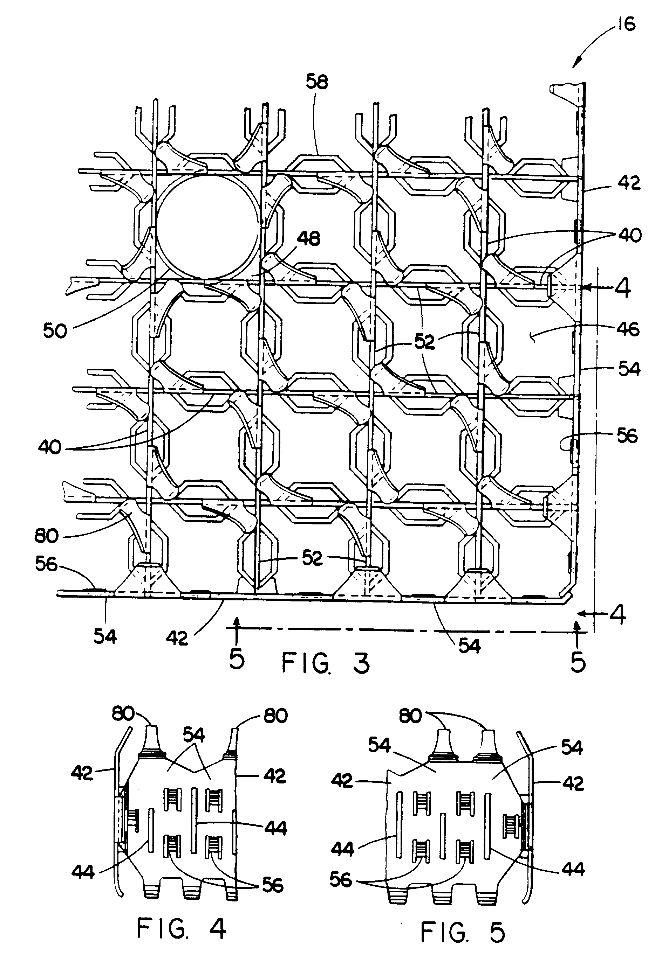

Each of the fuel-rod receiving cells 46 is defined by two pairs of opposing walls formed by sections of the straps which have fuel-rod supporting detents formed thereon. More particularly, and as shown in Figs. 3 to 5, the outer straps 42 define cell-wall sections 54 each of which has a pair of horizontally extending and vertically spaced fuel-rod engaged dimples 56 formed integral therewith and associated with one cell 46. Similarly, the inner straps 40 define cell-wall sections 52 each of which has a pair of horizontally extending and vertically spaced fuel-rod engaging dimples 58 formed integral therewith and associated with one cell 46. One of the dimples 58 on each wall section 52 of the inner straps 40 is located above spring structure consisting of elements 62 and 64 defined below and embodying the invention, whereas the other dimple 58 is located below it. Each cell 46 formed along the periphery of the grid 16 by the inner and outer straps 40, 42 has associated therewith four dimples 56, 58 and two spring structures, and each cell 46 formed in the grid 16 only by inner straps 40 has associated therewith four dimples 58 and two spring structures. Thus, the fuel rod in each cell 46 is contacted at six circumferentially and axially displaced locations thereon.

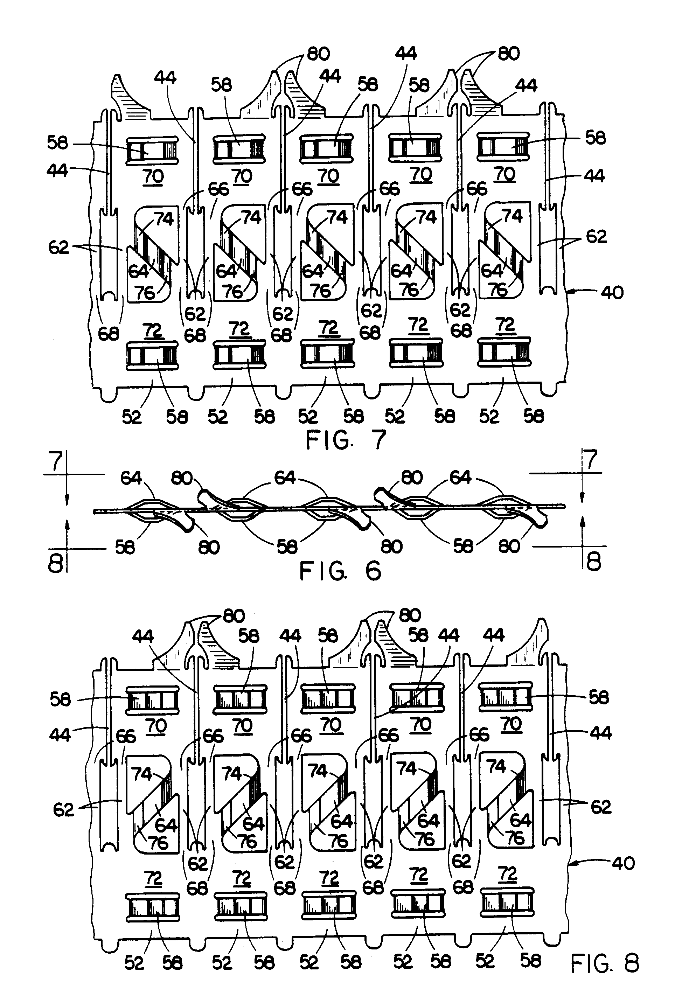

Referring now particularly to Figs. 6 to 18, the fuel-rod engaging spring structures according to the invention are formed from resiliently yieldable flexible material of the inner straps 40, such as stainless steel, the components of each spring structure being integrally formed, such as by a conventional stamping operation, from the respective wall section 52 of the inner straps 40.

Basically, each spring structure comprises a pair of laterally spaced elongate spring leg members 62 and an elongate spring cross member 64. Each leg member 62 of each spring structure has opposite upper and lower ends 66, 68 thereof integrally connected respectively to upper and lower portions 70, 72 of the associated wall section 52, and the cross member 64 extends diagonally between the two associated leg members 62 and has its opposite upper and lower ends 74, 76 integrally connected thereto respectively adjacent the upper end of one leg member and adjacent the lower end of the other. The whole spring structure thus formed by the leg members 62 and the diagonal cross member 64 has an effective length greater (e.g. two times) than the actual length which it occupies on each wall section 52 of the respective inner strap 40. The leg members 62 extend generally parallel with respect to one another and in a direction generally parallel to the longitudinal axes of the respective grid cells 46, and the cross members 64 preferably are slanted at about forty-five degrees with respect to the associated leg members 62 and with respect to the direction of coolant flow through the grid and to the longitudinal axis of each grid cell 46.

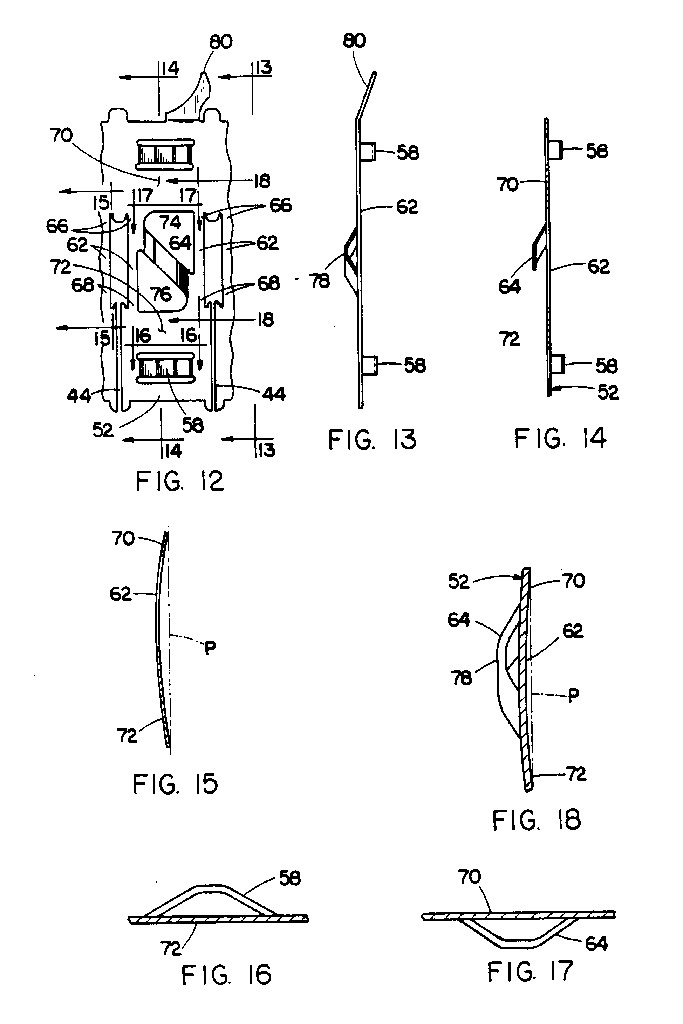

As seen best from Figs. 15 and 18, each leg member 62 is slightly bowed or arcuate along a longitudinal section through the leg member. Given such curvature, the leg member 62 projects from the plane P of the wall section 52 and toward the longitudinal axis of the associated cell 46. Each cross member 64 likewise is arched or arcuate along a longitudinal section thereof, and it projects from the wall section 52 toward the longitudinal axis of the associated cell 46 farther than the leg members 62, namely, far enough for the mid-point 78 of the cross member to engage the fuel rod 18 extending through the cell 46.

The cross member 64 of each spring structure is capable of resiliently yielding in a direction generally orthogonal to, and away from, the longitudinal axis of the associated cell 46 such that it is resiliently deflected toward the wall section 52 by a fuel rod upon insertion thereof into the associated cell 46. The leg members 62 which likewise project into the cell 46 while unoccupied are, upon insertion of a fuel rod 18 into the cell, resiliently deflected back into the plane P of the associated wall section due to the resilient deflection of the cross member 64 resulting from its engagement by the fuel rod being inserted. In such deflected positions, the leg members 62 do not block the flow of coolant through the grid 16. As seen from Figs. 13, 14, 16 and 17, the cross member 64 as well as the dimples 58 project from the wall section 52 so as to define therebetween an open space which permits coolant to flow unimpededly therethrough and along the fuel rod received in the cell.

In summary, the configuration of the spring structure allows a very low profile, a reduced grid height, and a low spring constant. The spring cross member 64 is set about forty-five degrees with respect to the direction of coolant flow but, in manufacture, is stamped out so as to form the leg members 62 which extend parallel to the direction of coolant flow and enable the spring structure to be compliant without increasing flow impedance.

While not forming part of the invention, the grid 16 can have mixing vanes 80 formed along the top edges of the inner and outer straps 40, 42 thereof.

## Claims

1. A nuclear-fuel-rod supporting grid composed of a plurality of straps (40) which are interleaved with one another in a manner forming a matrix of fuel-rod receiving cells each defined by sections (52) of said straps which form walls of the respective cell and of cells adjacent thereto, and each of which cell-wall defining strap sections (52) has a resiliently yieldable fuel-rod engaging spring structure formed integral therewith, characterized in that the spring structure (62, 64) on each cell-wall defining strap section (52) comprises:
(a) a pair of elongate leg members (62) which are spaced laterally apart and extend in a direction substantially parallel with respect to the longitudinal axis of the associated cell (46), each of said elongate leg members (62) having only the opposite ends thereof integrally connected to the associated cell-wall defining strap section (52); and
(b) an elongate cross member (64) which extends diagonally between said leg members (62) and is integrally connected thereto only at its opposite ends, said elongate cross member (64) projecting from the plane of said associated cell-wall defining strap section (52) inwards of the associated cell (46) and being resiliently deflectable toward said plane.

2. A nuclear-fuel-rod supporting grid according to claim 1, characterized in that said elongate cross member (64) is arched in a manner such as to define, between itself and the plane of the associated cell-wall defining strap section (52), a space which permits unimpeded flow of coolant fluid therethrough.

3. A nuclear-fuel-rod supporting grid according to claim 1 or 2, characterized in that said elongate cross member (64) is disposed at an angle of substantially forty-five degrees with respect to said leg members (62).

4. A nuclear-fuel-rod supporting grid according to any one of the preceding claims, characterized in that each of said leg members (62) is curved such as to project from the plane of the associated cell-wall defining strap section (52) inwards of the associated cell (46) to a lesser extent than said cross member (64), the leg members (62) being resiliently deflectable into said plane.

## Patentansprüche

1. Kernbrennstab-Haltegitter, bestehend aus einer Vielzahl von Streifen (40), die im Sinne der Bildung einer Matrix von Brennstabaufnahmezellen ineinander greifen, die jeweils durch Abschnitte (52) der Streifen gebildet sind, die Wände der betreffenden Zelle und dazu benachbarter Zellen bilden, und wobei jeder der zellenwandbildenden Streifenabschnitte (52) ein damit einstückig ausgebildetes, elastisch nachgiebiges, am Brennstab angreifendes Federteil aufweist, dadurch gekennzeichnet, daß das Federteil (62, 64) an jedem zellenwandbildenden Streifenabschnitt (52) aufweist:
a) zwei längliche Schenkelelemente (62), die seitlichen Abstand von einander haben und in einer zur Längsachse der betreffenden Zelle (46) etwa parallelen Richtung verlaufen, wobei jedes der länglichen Schenkelelemente (62) nur mit seinen entgegengesetzten Enden einstückig mit dem betreffenden zellenwandbildenden Streifenabschnitt (52) verbunden ist, und
b) ein längliches Querelement (64), das diagonal zwischen den Schenkelelementen (62) verläuft und nur an seinen beiderseitigen Enden einstückig damit verbunden ist, wobei das längliche Querelement (64) aus der Ebene des betreffenden Zellenwand bildenden Streifenabschnitts (52) einwärts in die betreffende Zelle (46) vorspringt und in Richtung zu dieser Ebene elastisch auslenkbar ist.

2. Kernbrennstab-Haltegitter nach Anspruch 1, dadurch gekennzeichnet, daß das längliche Querelement (64) in solcher Weise gewölbt ist, daß es zwischen sich und der Ebene des zugehörigen zellenwandbildenden Streifenabschnitts (52) einen Zwischenraum bildet, der ein ungehindertes Hindurchströmen von Kühlmittel ermöglicht.

3. Kernbrennstab-Haltegitter nach Anspruch 1 oder 2, dadurch gekennzeichnet, daß das längliche Querelement (64 ) unter einem Winkel von etwa 45° mit Bezug auf die genannten Schenkelelemente (62) verläuft.

4. Kernbrennstab-Haltegitter nach einem der vorhergehenden Ansprüche, dadurch gekennzeichnet, daß jedes der Schenkelelemente (62) so gewölbt ist, daß es aus der Ebene des zugehörigen Zellenwand bildenden Streifenabschnitts (52) einwärts in die betreffende Zelle (46) weniger weit als das Querelement (64) vorspringt, wobei die Schenkelelemente (62) elastisch in die genannte Ebene auslenkbar sind.

## Revendications

1. Grille de support de barres de combustible nucléaire, composée d'une pluralité de bandes (40) qui sont enchevêtrées mutuellement de manière à former une matrice de cellules réceptrices de barres de combustible définies chacune par des sections (52) desdites bandes qui forment les parois de la cellule correspondante ainsi que des cellules adjacentes à cette dernière, et chacune de ces sections de bande (52) définissant une paroi de cellule comporte une structure élastique en contact avec une barre de combustible et pouvant être déformée élastiquement, cette structure faisant corps avec cette section, **caractérisée** en ce que la structure élastique (62, 64) se trouvant sur chaque section de bande (52) définissant une paroi de cellule comprend :
(a) une paire d'éléments allongés formant jambes (62) qui sont espacés l'un de l'autre et qui s'étendent dans une direction sensiblement parallèle à l'axe longitudinal de la cellule associée (46), chacun desdits éléments allongés formant jambes (62) faisant corps par ses extrémités opposées avec la section de bande associée (52) définissant une paroi de cellule ; et
(b) un élément allongé formant traverse (64) qui s'étend diagonalement entre les éléments formant jambes (62) et qui fait corps avec ces derniers uniquement à ses extrémités opposées, ledit élément allongé formant traverse (64) faisant saillie du plan de ladite section de bande associée (52) définissant une paroi de cellule, vers l'intérieur de la cellule associé (46), et pouvant être dévié élastiquement en direction dudit plan.

2. Grille de support de barres de combustible nucléaire selon la revendication 1, **caractérisée** en ce que l'élément allongé formant traverse (64) est arqué de manière à définir, entre lui-même et le plan de la section de bande associée (52) définissant une paroi de cellule un espace qui permet un écoulement libre du fluide réfrigérant à travers cet espace.

3. Grille de support de barres de combustible nucléaire selon la revendication 1 ou 2, **caractérisée** en ce que l'élément allongé formant traverse (64) est disposé suivant un angle sensiblement égal à 45° par rapport auxdits éléments formant jambes (62).

4. Grille de support de barres de combustible nucléaire selon l'une quelconque des revendications précédentes, **caractérisée** en ce que chacun des éléments formant jambes (62) est courbé de manière à faire saillie du plan de la section de bande associée (52) définissant une paroi de cellule vers l'intérieur de la cellule associée (46) sur une distance inférieure audit élément formant traverse (64), les éléments formant jambes (62) pouvant être déviés élastiquement jusque dans ledit plan.
